# EUROPEAN PATENT APPLICATION

(11) **EP 2 305 445 A1**
(43) Date of publication of application: **06.04.2011**
(21) Application number: 10176358.9
(22) Date of filing: 13.09.2010
(51) Int. Cl.: B29C 45/16, H01H 13/88

(54) **Key and method of manufacturing the same**

(30) Priority: 30.09.2009 CN 200910308058
(71) Applicant: Hong Fu Jin Precision Industry (ShenZhen) Co., Ltd., Longhua Town, Bao'an District Shenzhen City Guangdong 518109 (CN); Hon Hai Precision Industry Co., Ltd., Tu-cheng City, Taipei Hsien (TW)
(72) Inventor: Xu, Hao-Dong, 518109, Shenzhen City Guangdong (CN); Zhong, Shou-Fang, 518109, Shenzhen City Guangdong (CN); Chen, Chu-Yuan, Tu-chen City (TW); Lee, Ming-Wu, Tu-chen City (TW)
(74) Representative: Wilson, Peter

(57) **Abstract**

A key (10) includes a preform (15), a first molded layer (17) formed on a first side surface of the preform by injection molding, and a second molded layer (19) formed on the second side surface by injection molding. The preform, the first molded layer, and the second molded layer cooperatively define a depression (21). A periphery of the first molded layer forms an assembly portion. A portion of the second layer on the periphery of the first molder layer is substantially parallel to a portion of the ink layer (13) on the periphery of the first molder layer. A method of manufacturing the key (10) is also provided.

## Description

### BACKGROUND

### 1. Technical Field

The present application relates to a key and a method of manufacturing the key.

### 2. Description of the Related Art

A typical input key is manufactured as follows. Molten plastic material is injection molded to form a plastic main body having a contact surface, and an ink layer is formed on the contact surface of the main body according to predetermined patterns to represent characters. However, with use, the ink layer may fade and eventually disappear.

Therefore, there is room for improvement within the art.

### BRIEF DESCRIPTION OF THE DRAWINGS

The components in the drawings are not necessarily drawn to scale, the emphasis instead being placed upon clearly illustrating the principles of the present disclosure.

FIG. 1 is a cross section of one embodiment of a key including a preform, a first molded layer formed on a first side surface of the preform, a second molded layer formed on a second side surface of the perform, and a film.

FIG. 2 is a cross section of the film of FIG. 1.

FIG. 3 is a cross section of an ink layer formed on the film of FIG.2.

FIG. 4 is a cross section of the preform, the film, and the ink layer of FIG. 3 after hot pressing.

FIG. 5 is a cross section of the first molded layer of FIG. 1 formed on the first side surface of the preform of FIG. 4.

FIG. 6 is a cross section of one embodiment of an injection mold used to manufacture the key of FIG. 1.

FIG. 7 is a cross section of a key having a stub bar manufactured by the injection mold of FIG. 6.

### DETAILED DESCRIPTION

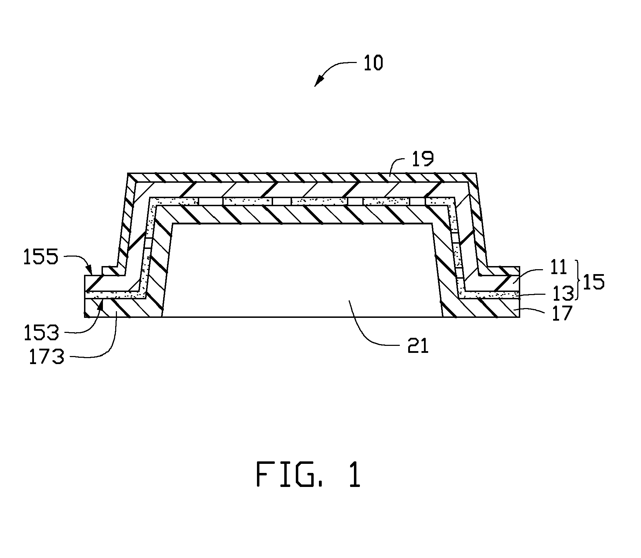

Referring to FIG. 1, a key 10 includes a preform 15, a first molded layer 17, and a second molded layer 19. The preform 15 has a first side surface 153 and a second side surface 155 opposite to the first side surface 153. The first molded layer 17 is formed on the first side surface 153 by injection molding. The second molded layer 19 is formed on the second side surface 155 by injection molding. The preform 15, the first molded layer 17, and the second molded layer 19 cooperatively define a depression 21 to receive electronic components (not shown) positioned on an electronic device. A part of the first molded layer 17 forms the interior of the depression 21.

A periphery of the first molded layer 17 forms an assembly portion 173 that engages with components of the electronic device to efficiently fix the key 10 to the electronic device.

In the illustrated embodiment, the preform 15 further includes a film 11 and an ink layer 13 formed on a side surface of the film 11. The preform 15 is made by hot pressing and cutting the film 11. The film 11 may be plastic, such as polycarbonate, acrylonitrile-butadiene-styrene terpolymer, polystyrene, poly vinyl chloride, polycarbonate, or acrylonitrile-butadiene-styrene. A thickness of ink layer 13 is about 0.1 millimeters (mm) to about 0.2mm.

The first molded layer 17 may be plastic such as polycarbonate, acrylonitrile-butadiene-styrene terpolymer, polystyrene, poly vinyl chloride, polycarbonate, or acrylonitrile-butadiene-styrene.

A thickness of the first molded layer 17 may be about 0.6mm to about 1.0mm.

The second molded layer 19 is transparent or semi-transparent and may be plastic, such as polycarbonate, acrylonitrile-butadiene-styrene terpolymer, or poly-methylmethacrylate. Additionally, a portion of the second layer 19 on the periphery of the first molder layer 17 is substantially parallel to a portion of the ink layer 13 on the periphery of the first molder layer 17.

One embodiment of a method for manufacturing the key 10 is described as follows.

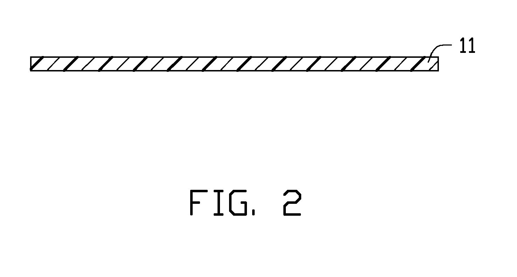

Referring to FIG. 2, the film 11 is first provided.

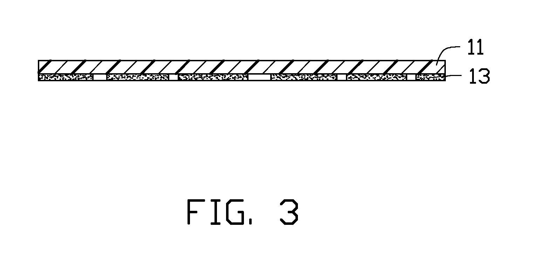

Referring to FIG. 3, the ink layer 13 is then formed on a surface of the film 11 by printing.

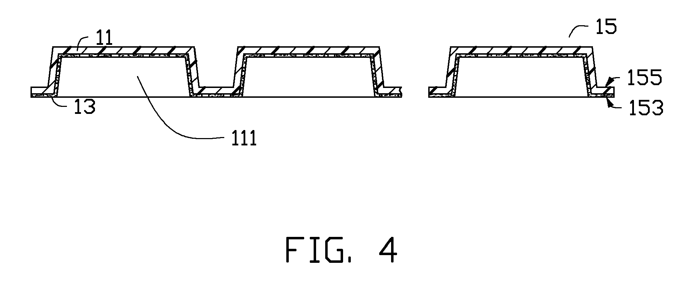

Referring to FIG. 4, the film 11 is hot pressed to define a plurality of depressions 111 with a part of the ink layer 13 as the interior of the depressions 111. The film 11 is cut and a plurality of preforms 15 are formed. Each preform 15 corresponds to a depression 111 and has a first side surface 153 and a second side surface 155 opposite thereto.

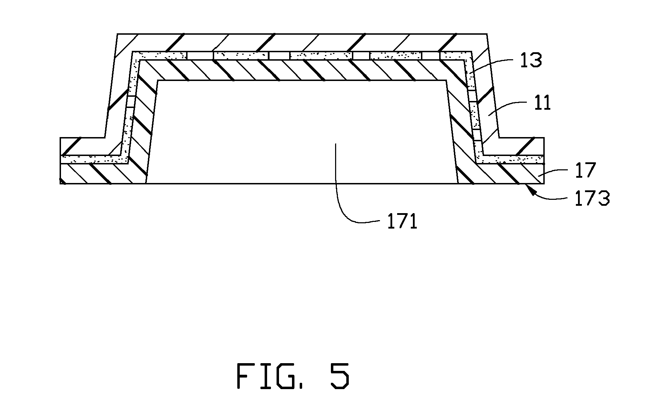

Next, referring to FIG. 5, the first molded layer 17 is formed on the first side surface 153 of the preform 15 by injection molding. The first molded layer 17, the film 11, and the ink layer 13 cooperatively define the depressions 171.

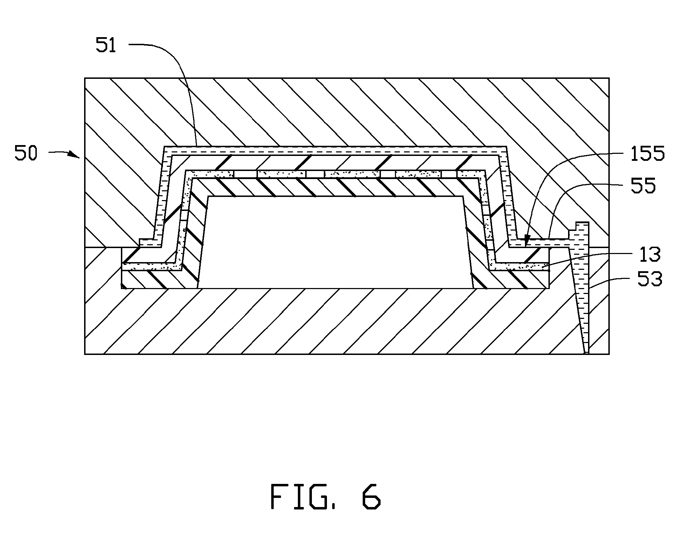

Referring to FIG. 6, an injection mold 50 is provided. The injection mold 50 includes a cavity 51, a runner 53, and a gate 55 communicating the runner 53 with the cavity 51.

The preform 15 and the first molded layer 17 are received in the cavity 51 such that the gate 55 substantially aligns with an edge of the preform 15 and is adjacent to the second side surface 155, and the gate 55 substantially parallels the ink layer 13.

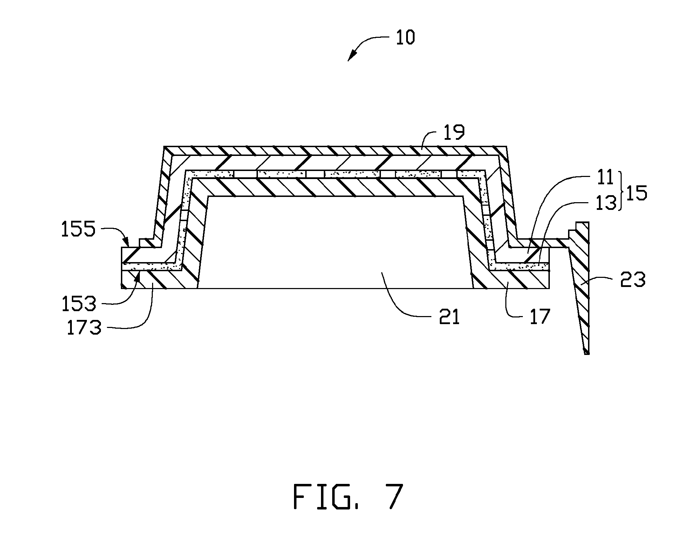

Also referring to FIG. 7, a molten material of a second molded layer 19 passes the runner 53 and the gate 55, and enters the cavity 51. The molten material of the second molded layer 19 is transparent or semi-transparent and may be plastic such as polycarbonate, acrylonitrile-butadiene-styrene terpolymer, or poly-methylmethacrylate. The molten material of the second molded layer 19 is solidified and the second molded layer 19 is formed on the second side surface 155 of the preform 15.

A stub bar 23 is then cut off, thus yielding the key 10 as shown in FIG. 1.

Because the gate 55 substantially aligns with an edge of the preform 15 and is adjacent to the second side surface 155, and the gate 55 is substantially parallel to the ink layer 13, the second molded layer 19 may be formed on the second side surface 155 of the preform 15 directly without additional steps and the ink layer 13 remains protected.

Finally, while various embodiments have been described and illustrated, the embodiments are not to be construed as being limited thereto. Various modifications can be made to the embodiments by those skilled in the art without departing from the true spirit and scope of the embodiments as defined by the appended claims.

## Claims

1. A key, comprising:
a preform having a first side surface and a second side surface opposite to the first side surface;
a first molded layer formed on the first side surface by injection molding; and
a second molded layer formed on the second side surface by injection molding, wherein
the preform, the first molded layer, and the second molded layer cooperatively define a depression; a periphery of the first molded layer forms an assembly portion; and a portion of the second layer on the periphery of the first molder layer is substantially parallel to a portion of the ink layer on the periphery of the first molder layer.

2. The key of claim 1, wherein the preform comprises a film and an ink layer formed on a side surface of the film.

3. The key of claim 2, wherein the film is polycarbonate, acrylonitrile-butadiene-styrene terpolymer, polystyrene, poly vinyl chloride, or polycarbonate/acrylonitrile-butadiene-styrene.

4. The key of claim 2 or claim 3, wherein a thickness of the ink layer is in a range from about 0.1mm to about 0.2mm.

5. The key of any preceding claim, wherein the first molded layer is selected from a group consisting of polycarbonate, acrylonitrile-butadiene-styrene terpolymer, polystyrene, poly vinyl chloride, polycarbonate, and acrylonitrile-butadiene-styrene.

6. The key of any preceding claim, wherein a thickness of the first molded layer is about 0.6mm to about 1.0mm.

7. A method for manufacturing a key, comprising steps of:
providing a film;
forming an ink layer on the film;
hot pressing the film and cutting the film, thus forming a plurality of preforms, wherein
each preform has a first side surface and a second side surface opposite to the first side surface, the ink layer being on the first side surface;
forming a first molded layer on the ink layer by injection molding;
providing an injection mold comprising a runner, a cavity, and a gate communicating the runner with the cavity;
positioning the first molded layer and the preform in the cavity of the injection mold such that the gate of the injection mold substantially aligns with an edge of the preform and is adjacent to the second side surface of the preform;
passing molten material through the runner and the gate into the cavity, thereby forming a second molded layer on the second side surface of the preform.

8. The method of manufacturing the key of claim 7, wherein a material of the film is selected from a group consisting of polycarbonate, acrylonitrile-butadiene-styrene terpolymer, polystyrene, poly vinyl chloride, polycarbonate, and acrylonitrile-butadiene-styrene.

9. The method of manufacturing the key of claim 7 or claim 8, wherein a thickness of the ink layer is about 0.1mm to about 0.2mm.

10. The method of manufacturing the key of one of claims 7 to 9, wherein the ink layer is formed by printing.

11. The method of manufacturing the key of one of claims 7 to 10, wherein a thickness of the first molded layer is about 1.5mm to about 2.5mm.

12. The method of manufacturing the key of one of claims 7 to 11, wherein a plurality of depressions is defined in the film after hot pressing the film.

13. The method of manufacturing the key of claim 12, wherein the ink layer is in the interior of the depression.

14. The method of manufacturing the key of one of claims 7 to 13, wherein the first molded layer covers the ink layer completely.

15. The method of manufacturing the key of one of claims 7 to 14, wherein a material of the first molded layer is selected from a group consisting of polycarbonate, acrylonitrile-butadiene-styrene terpolymer, polystyrene, poly vinyl chloride, polycarbonate, and acrylonitrile-butadiene-styrene.

16. The method of manufacturing the key of one of claims 7 to 15, wherein a periphery of the first molded layer forms an assembly portion.

17. The method of manufacturing the key of one of claims 7 to 16, wherein the second molded layer is transparent or semi-transparent.

18. The method of manufacturing the key of one of claims 7 to 17, wherein a material of the second molded layer is selected from a group consisting of polycarbonate, acrylonitrile-butadiene-styrene terpolymer, and poly-methylmethacrylate.

19. The method of manufacturing the key of one of claims 7 to 18, wherein a thickness of the second molded layer is about 0.6mm to about 1.0mm.
